Europäisches Patentamt

(19) European Patent Office

Office européen des brevets

(11) Publication number: **0 050 034**
A1

(12) # EUROPEAN PATENT APPLICATION

(21) Application number: **81304751.1**

(22) Date of filing: **13.10.81**

(51) Int. Cl.³: **H 02 H 9/04**

(30) Priority: **14.10.80 US 196679**

(43) Date of publication of application:
**21.04.82 Bulletin 82/16**

(84) Designated Contracting States:
**AT BE CH DE FR GB IT LI LU NL SE**

(71) Applicant: **Power Integrity Corporation**
**300 East Wendover Avenue**
**Greensboro North Carolina 27408(US)**

(72) Inventor: **Hershfield, Walton Norman**
**37 Golden Hind Passage**
**Corte Madera California 94925(US)**

(74) Representative: **Wotherspoon, Graham et al,**
**FITZPATRICKS 48 St. Vincent Street**
**Glasgow G2 5TT(GB)**

(54) Transient surge protective circuit.

(57) In an AC circuit a unipolar transient surge suppressor is shunted across a sensitive load, and a plurality of steering or rectifier diodes are so arranged in the circuit that, by their switching action, all transient energy that appears on the sinusoidal wave or waves of other shape of the AC circuit is guided to the unipolar transient surge suppressor such that the polarity of the voltage is applied in the proper direction. Thus transient surges occuring on either the positive or negative half-wave are properly directed through and dissipated by the unipolar suppressor.

FIG. 5

EP 0 050 034 A1

# TRANSIENT SURGE PROTECTIVE CIRCUIT

## Background & Summary of the Present Invention

The detrimental effect of transient voltage or current surges on sensitive electrical equipment, such as semiconductor devices is well known. A major cause of semiconductor, insulation and component failure is electrical overstress. Perturbations on a power main or bus can damage electrical equipment, cause sensitive electrical devices to malfunction, or severely limit the life of such sensitive devices. Any deviation from a pure harmonic wave shape creates parasitic fields in electronic devices being served, which not only reduces the efficiency and possibly damages such electronic devices, but also causes a useless consumption of energy.

There have been various approaches to solving this problem, many of which approaches include the shunting of a transient surge supressor device across the load or electronic device(s) being served. Examples of such devices are shown in United States Patents to Fussell, No. 4,023,071; Byrnes, No. 4,068,279; Jonassen, No. 3,890,543; Clark, No. 3,934,175; Engle, No. 3,939,363; and Taylor, No. 3,968,472. It should be noted, however, that all of these approaches which may solve the problem of transient surges, are also relatively complicated and expensive in that, in order to be effective, they each require a bipolar transient surge suppressor device, or at least a pair of suppressor devices arranged in back to back relation.

Non-linear voltage dependent devices as used for electrical transient surge suppressors divide themselves into two basic classes which by their natural electrical characteristics are either bipolar or unipolar; a bipolar device being one that is responsive to alternating voltage in either polarity. A unipolar device is responsive to voltage in only one polarity and will usually self destruct if subjected to voltages of the opposite polarity.

Typical bipolar devices are gas discharged tubes, voltage dependent resistors and metal oxide varistors. Unipolar devices are typically selenium rectifiers, silicon rectifiers, transistors, zener diodes and other semiconductor devices whose junction is of the PN, NP, PNP or NPN configuration. To adapt a unipolar device for bipolar operation requires an increase in both electrical complexity and cost.

This invention provides a means by which unipolar devices may be used in bipolar applications without the increased cost or complexity as required in the aforementioned patents.

It is well known that a rectified load sees the AC power input as a direct current or unipolar source of energy. The principles of rectification may be applied equally to both single and multiphase power circuits. The steering characteristics of rectifier diodes can be used to sum the voltage and currents as applied to a particular load. Therefore, using the principles of rectification it is possible to take the transient energy that might appear in either polarity on a sinusoidal or other alternating voltage waveform and steer it through rectifiers to a single (or combination) transient surge suppression devices whose combined response characteristics need only be unipolar, as contrasted to the necessity of bipolar operation if the device were connected directly across the power main as shown in the above approaches.

In the case of three-phase, delta configuration the use of such steering rectifier diodes as described hereinabove, not only allows the unipolar transient surge suppressor devices to be used, but also reduces the number of such devices from three to one. In the case of three-phase Wye configurations, the reduction of transient surge suppression devices is from six bipolar devices to three unipolar devices. Further, the unipolar devices are less complicated and less expensive in and of themselves. In all cases this simplification of the circuit and number of components therein reduces not only the production costs but also the likelihood of failure of the circuit.

In general then the present invention is directed to the application of the steering characteristics of rectifier diodes to AC transient surge suppression circuits in such a manner that transient surges occurring on either the positive or negative half-wave are properly directed through and dissipated by a unipolar transient surge suppressor. Toward this end the unipolar transient surge suppressor means is shunted across the sensitive electrical device to be protected or served. An electrical steering means, which preferably comprises a plurality of rectifier diodes, is introduced into the circuit for directing all transient energy that appears on either half-wave of the AC circuit to the proper terminal of the unipolar transient surge suppression means.

The surge characteristics of the new junction rectifiers, as developed in todays' technology, make them ideally suited for steering high energy, short duration electrical transients. Thus such junction rectifiers are ideally suited for use as the steering diode in this invention, however, it should be recognized that other steering means such as silicon controlled rectifiers, bipolar power transistors or junction field effect terminal type power transistors may also be utilized.

It is therefore an object of the present invention to provide a simplier, less expensive transient surge suppression network for AC circuits.

It is another object of the present invention to provide a transient surge suppression network for complete protection of AC circuits yet which utilizes only unipolar transient surge suppression devices.

Another object of the present invention is to provide an apparatus and method for steering transient surges of energy in one direction through a unipolar transient surge suppression means even though such surges may occur in different directions and polarities.

Other objects and fuller understanding of the invention will become apparent upon reading the following detailed description of a preferred embodiment along with the accompanying drawings in which:

Figure 1 is a graphical representation of a typical alternating voltage and current waveform having electrical transients thereon;

Figure 2 is a graphical representation of the waveform of Figure 1 after rectification;

Figure 3 is a graphical representation of a transient current flowing through a transient surge suppressor in accordance with the present invention;

Figure 4 is a schematic representation of the flow of current through a unipolar transient surge suppressor as compared with the flow of a current through a bipolar transient surge suppressor;

Figure 5 is a schematic representation of a unipolar transient surge suppressor used to protect a bipolar single phase, two-wire circuit;

Figure 6 is a graphic representation of a typical single phase, three-wire voltage and current waveform with electrical transients thereon;

Figure 7 is a graphic representation of the waveform of Figure 6 after rectification and as applied to a unipolar transient surge suppression device in accordance with the present invention;

Figure 8 is a schematic representation of a transient surge suppression device utilized in connection with a single phase, three-wire system in accordance with the present invention;

Figure 9 is a graphic illustration of the instantaneous phase to phase voltages of the delta or Wye three phase system;

Figure 10 is a graphic illustration of the phase to neutral voltages encountered in the Wye system;

Figure 11 is a schematic representation of a three phase delta generator;

Figure 12 is a schematic representation of a three phase Wye generator;

Figure 13 is a graphic representation of the output wave form of the three phase delta and Wye circuits without rectification;

Figure 14 is a graphic representation of the output wave form from three phase delta and Wye circuits after rectification;

Figure 15 is a schematic representation of the rectifiers circuit for three phase, delta circuits;

Figure 16 is a schematic representation of the rectifiers circuit for three phase, Wye circuits;

Figure 17 is a schematic representation of a protective circuit for three phase, delta systems utilizing a unipolar transient surge suppression device; and

Figure 18 is a schematic representation of a protective circuit for three phase, Wye circuits utilizing the unipolar transient surge suppression devices.

Detailed Description of A Preferred Embodiment

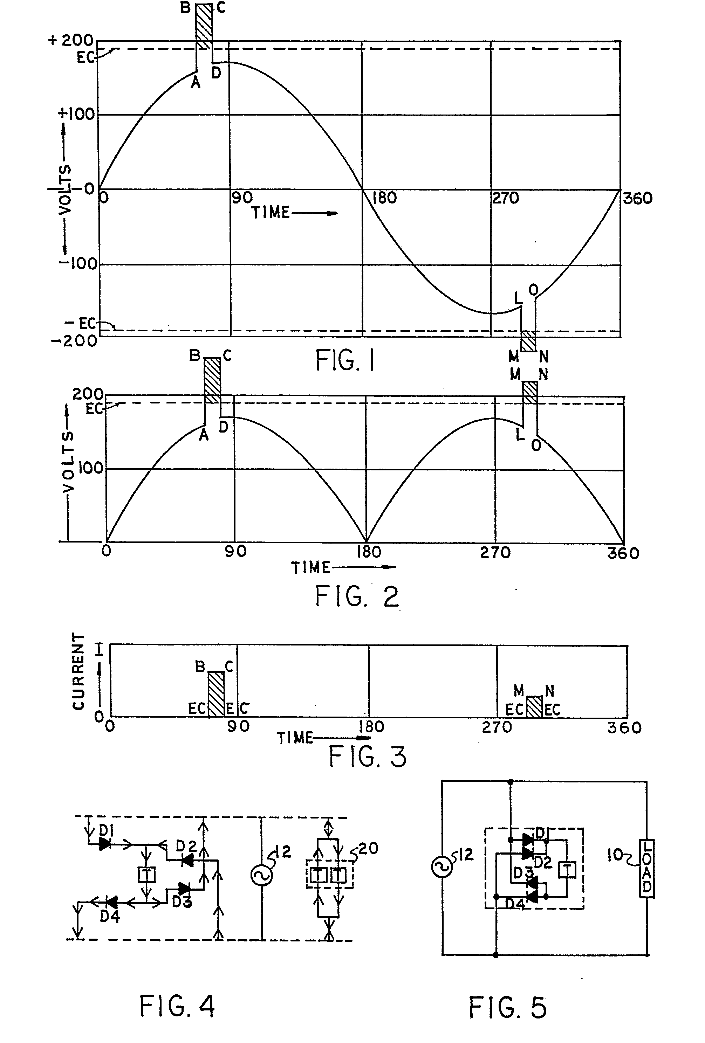

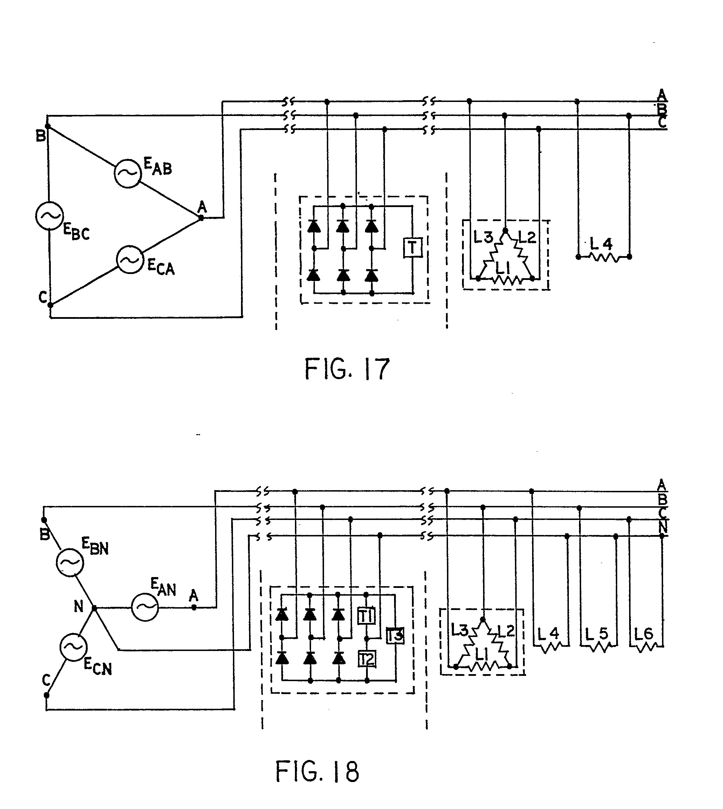

Turning now to the drawings, the present invention, in general is directed to protective circuits (Figures 5, 8, 17 and 18) for electrical devices, which protective circuits utilize unipolar, as opposed to bipolar transient surge suppression means T, hereinafter sometimes referred to as TSS. A network of steering diodes (steering means) guide the transient energy to the aforesaid unipolar transient energy to the aforesaid unipolar transient surge suppression means such that the polarity of the voltage is applied in the proper direction.

In Figure 5 there is illustrated the well known fact that a device, in this case a transient surge suppressor T, served by a rectified waveform, sees the AC power source as a direct current or unipolar source of energy. If the electrical transient perturbations of ABCD and LMNO of Figure 1 are omitted, there results an example of the ideal sinusoidal waveform. Referring to Figure 4, it is seen that on the positive half (0 to 180 degrees) of the Figure 1 cycle switching diodes D1 and D4 provide the current and voltage path to the unipolar TSS. On the negative half (180 to 360 degrees) of the cycle, switching diodes D2 and D3 provide a voltage and current path to the unipolar TSS T and back to the source. Of importance here is the fact that any transient currents will flow through the TSS in only one direction. It is this diode switching action that makes the use of unipolar TSS devices practical. For comparison the voltage and current path to a bipolar TSS is illustrated on the right hand side of the generator 12. The modified voltage and current waveform after rectification by switching diodes D1, D2, D3 and D4 is illustrated in Figure 2. If transient electrical pulses ABCD and LMNO are added to the bipolar waveform of Figure 1, it is immediately apparent that the voltage of transient LMNO is of the wrong polarity and would in all probability destroy a unipolar device if applied thereto. However it is seen in Figure 2 that the polarity of the negative transient LNMO has been reversed by switching diodes D3 and D4, and as illustrated in Figure 2 if the clamping voltage $E_c$ of the unipolar TSS device is exceeded as shown in Figure 3, the transient current does indeed flow through that unipolar TSS in a single appropriate direction.

It must be noted here that while the illustrative example of Figure 1 uses a sinusoidal waveform to define the unipolar TSS technique, the unipolar principle is applicable to any waveform from simple sinusoidal to square, rectangular, trapezoidal, triangular pulse or other format that would provide a cyclic reversal of polarity.

In Figure 5 there is illustrated a generator 12 of any waveform configuration serving a load 10. This illustrates the use of a unipolar TSS T and switching diodes D1-D4 to provide protection to a load that may be subjected to transients of either polarity.

While the voltages referenced herein relate to 120/240, one phase, two and three wire systems or 120/208 three phase three wire delta or four wire Wye system, the voltages may be of any value as selected for the power distribution system, including high voltage transmission systems operating at a kilovolt level. The selected clamping voltages $E_C$ of the unipolar transient surge suppressor TSS devices may be of any appropriate value, and to achieve certain performance criteria, the unipolar device may be used in electrically related combinations supported by electrical components such as resistors, capacitors or inductors.

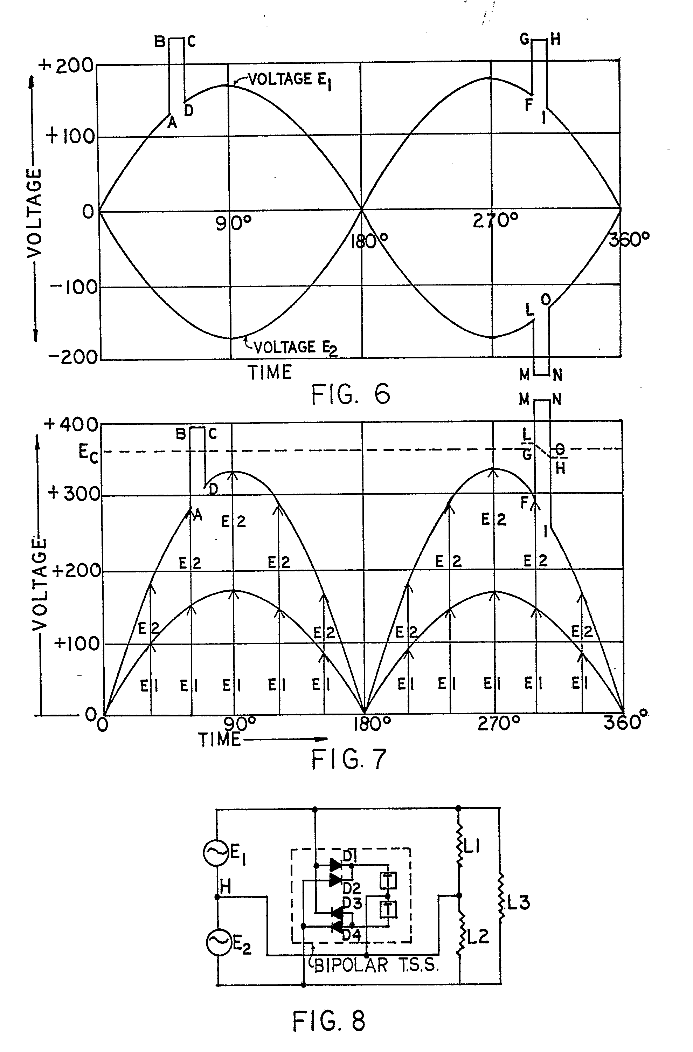

In Figures 6 through 8 there is illustrated a more complex power distribution configuration. Typical voltages used in this example are those normally used to serve homes, apartments and small businesses, 120/240 volt single phase, three wire. In Figure 6 the voltage waveforms of sinusoidal generators El and E2 are 180 degrees out of phase with respect to the line neutral and would be additive if summed across load L3 shown in Figure 8. Loads Ll and L2 return to the common neutral N of the system. It is well known, if loads Ll and L2 are of equal size, that no current flows in the neutral conductor of the system. The current carried by the neutral is equal to the arithmetic difference between the currents flowing in summed loads represented by Ll and L2.

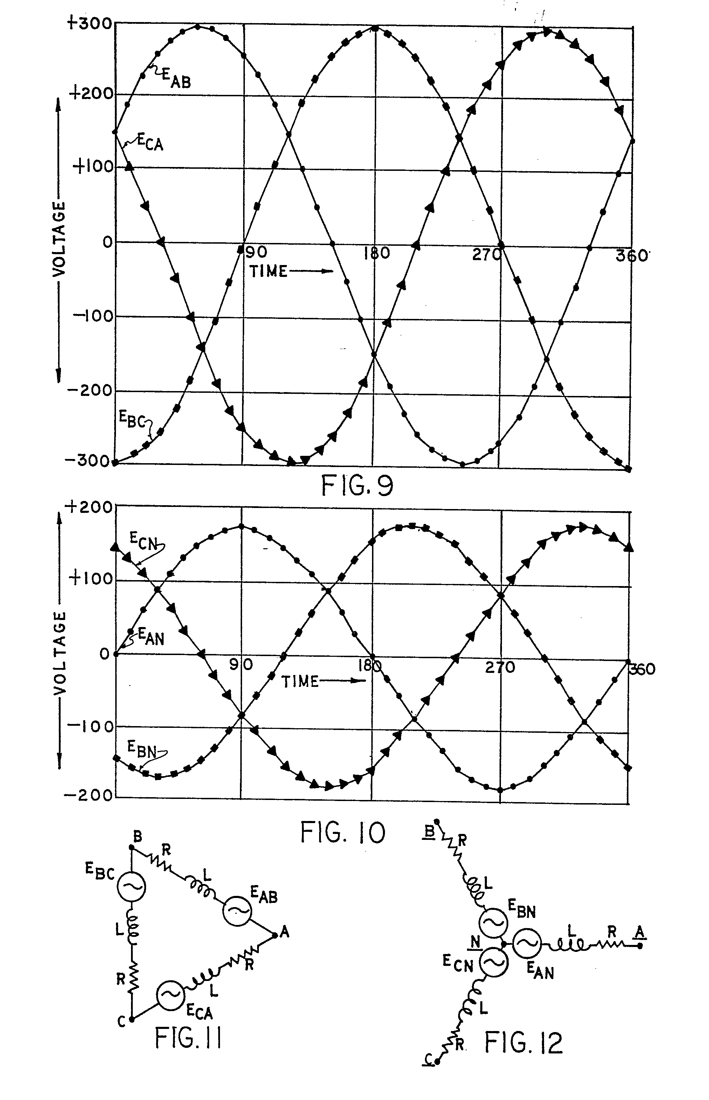

A transient voltage ABCD, as shown in Figure 6, would create a current differential between Ll and L2. Presuming equality of load, the transient voltage unbalance would cause a greater current to flow in Ll and L2. This would cause an increased potential to be applied between diode Dl and TSS device Tl of Figure 8. If $E_C$ were the clamping level, current would flow through the TSS device Tl to the neutral N. If the transient voltage appears across load L3, as shown by FGHI and LMNO of Figure 6, the transient voltages would be added to the summed generator voltage El and E2 and result in the waveform, as shown in Figure 7. This addition forms a combined positive transient voltage represented by FMNI. If this voltage exceeds the clamping voltage $E_C$ indicated in Figure 7, the surplus transient energy is dissipated through diode Dl, TSS Tl, TSS T2 and diode D4. It should be noted that with the transient voltage applied as an equal positive and negative voltage across load L3 that the amplitude change is equal in loads L1 and L2, hence this will cause no flow of current in the neutral line. This same principle is applicable to the three phase Wye system addressed in Figures 9-18.

In Figures 11 and 12 there is illustrated two of the most popular electric three phase power distribution systems, the delta and the Wye generator configuration. With the generator there is also shown the inductive L and resistive R characteristics which are an integral part of the generator characteristics. It is well known that the instantaneous power in a single phase system varies sinusoidally at twice the line frequency, however, in the three phase system with balanced load the total instantaneous power is constant. This significant advantage makes the three phase power distribution preferred, particularly for large commercial and industrial installations.

In Figures 9 and 10 there is graphically illustrated the instantaneous voltage - time relationship between the six voltages possible in the three phase system. In Figure 9 there is illustrated the instantaneous phase to phase voltages ($E_{AB}$, $E_{BC}$, $E_{CA}$) of the Wye or Delta three phase system. In Figure 10 there is illustrated the phase to neutral voltages ($E_{AN}$, $E_{BN}$, $E_{CN}$) encountered in the Wye system.

It should be noted that at each instant in time the sum of the voltages is always zero. If the current is in phase or the power factor is of constant magnitude with balanced load, the instantaneous sum of the currents serving the load is also equal to zero.

It is significant to note when switching of a single phase electrical load at that instant in time when the voltage is zero an unwanted electrical transient cannot be generated. However, when dealing with the simultaneous three pole switching of a three phase load, reference to Figures 9 and 10 will indicate that only one voltage may be at zero at any instant in time, and the other voltages are 0.866 of the maximum amplitude. For this reason switching of inductive three phase loads will always cause undesirable electrical transients.

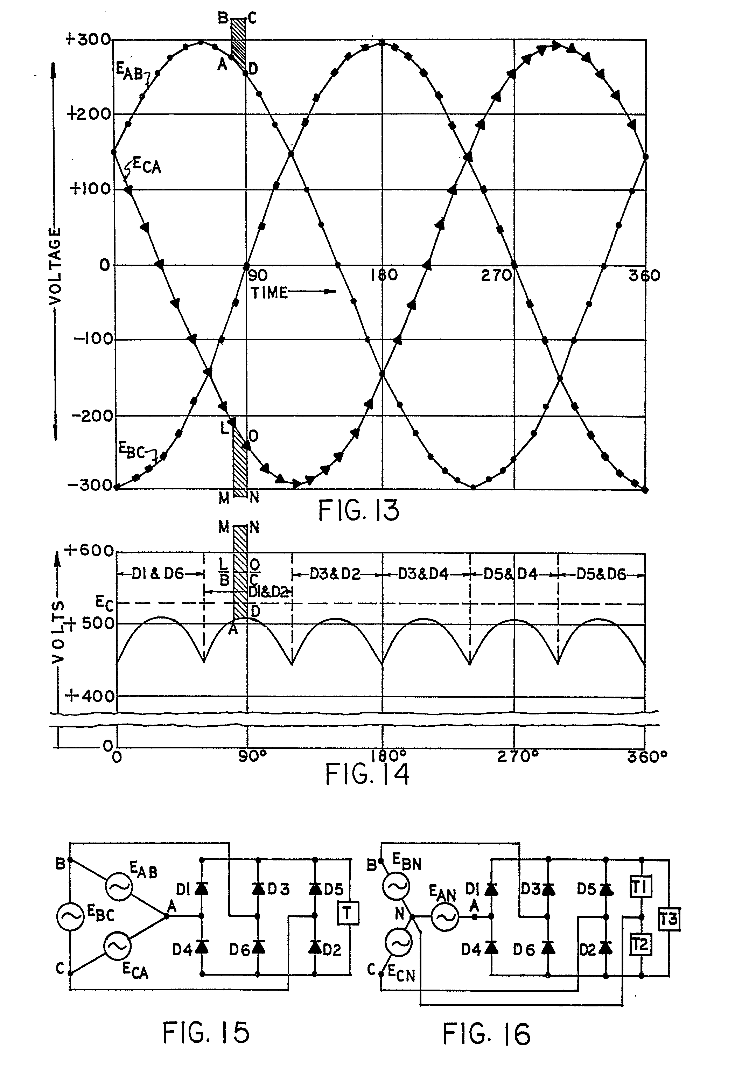

In the case of the three phase delta configuration, as shown in Figure 15, the use of steering rectifier diodes D1-D6 not only allows unipolar transient surge suppressor devices to be used but in the case of the delta circuit reduces the number of devices required from three to one. Further that single device is reduced to its most simple configuration. For example, a unipolar selenium transient surge suppressor would require only half as many plates as the bipolar configuration. As a result, for the delta unit operating in the unipolar mode with steering diodes, the number of plates required would be one-sixth (16.6%) of that required for a bipolar unit.

In the case of the three phase Wye configuration, as shown in Figure 16, the number of transient surge suppression devices is reduced from six bipolar devices (3 units phase to phase and 3 units phase to neutral) to three unipolar devices (one unit phase to phase and two units phase to neutral). To give another example, as expanded above the number of selenium plates required for phase to phase protection in the unipolar mode would be one-sixth that required for bipolar protection. In the phase to neutral protection requiring two unipolar TSS, the number of selenium plates required would be reduced to one-third those required for the bipolar protection.

While a preferred embodiment of the present invention has been described in detail hereinabove, it is apparent that various changes and modifications might be made without departing from the scope of the invention which is set forth in the accompanying claims.

CLAIMS

1. A transient surge protective circuit for electrical devices in an AC circuit having at least a positive line and a negative line, said protective circuit comprising:

a) unipolar transient surge suppression means shunted across said electrical device to be protected;

b) an electrical steering means between an AC source and said suppression means comprising a plurality of rectifier diodes which diodes are so arranged that, by their switching action, the transient energy is guided to the unipolar TSS means such that the polarity of the voltage is applied in the proper direction;

c) whereby transient surges appearing on either the positive half-wave or the negative half-wave are properly directed through and dissipated by said unipolar transient surge suppression means.

2. The circuit according to Claim 1 wherein said unipolar suppression means allows current to pass in one direction only and said electrical steering means comprising:

a) a first rectifier diode arranged in one line of said AC circuit and so oriented that transients occurring on one half-wave are directed in said one direction;

b) a wire connecting the other line with the said one line, and a second rectifier diode positioned therein and so oriented with respect thereto that transients occurring on the other half-wave are directed from the other line to the said one line and thereafter in said one direction through said suppression means.

3. The circuit according to Claim 1 wherein said surge suppression means is selected from the unipolar group, containing a Zener diode, a selenium rectifier, a transistor and other semi-conductor devices whose junction is of the PN, NP, PNP, NPN configuration.

4. The circuit according to Claim 1 wherein said AC circuit is generated by a three-phase Wye source and wherein said unipolar suppression means comprises a first and second unipolar suppression device, an electrical line connected at one end between the appropriate terminal of said first suppression device and the opposite terminal of the second suppression device and the junction terminal to the common (neutral) point of said three-phase Wye unit, and further wherein said electrical steering means comprises a first set of rectifier diodes so arranged as to steer transient surges appearing on the positive half-wave of any phase to the appropriate terminal of a first one of said unipolar suppression devices, and a second set of rectifier diodes so arranged as to steer current from the appropriate terminal of said second suppression device back to the negative side of each phase's AC voltage source.

5. The circuit according to Claim 1 wherein said AC circuit is generated by a three-phase Delta source and wherein said unipolar suppression means comprises a single unipolar suppression device, said electrical steering means comprises a first set of rectifier diodes arranged as to steer transient surges appearing on each half-wave of each phase to the appropriate terminal of said suppression device and a second set of rectifier diodes arranged as to provide a pathway for the current leaving said suppression device back to the opposite side of each phase source.

0050034

1/5

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

0050034

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US – A – 3 211 929 (F.J. PRINES et al.) * column 1, lines 1 to 67; fig. * | 1-3 | H 02 H 9/04 |
| X | GB – A – 1 436 625 (KABUSHIKI KAISHA SANKOSHA) * claim 1; fig. 1,3 * | 1-5 | |
| X | GB – A – 1 236 568 (COAL INDUSTRY) * claim 1; fig. 1 * | 1 | |
| | GB – A – 1 420 387 (SEMIKRON GESELL-SCHAFT FÜR GLEICHRICHTERBAU) * claim 1; fig. 2 * | 3 | TECHNICAL FIELDS SEARCHED (Int. Cl.³) H 02 H 9/04 |
| | US – A – 3 416 002 (W. FAUST) * fig. * | 3 | |
| | DE – A – 2 244 081 (P. KOFAHL) * fig. 2,5 * | 3 | |
| A | DE – A1 – 2 932 152 (ASEA AB) * pages 8 to 10, fig. 1 * | | CATEGORY OF CITED DOCUMENTS |
| A | GB – A – 1 254 711 (INTERNATIONAL RECTIFIER CO.) * page 1, lines 10 to 18, page 2, lines 46 to 72; fig. 2 * | 4,5 | |

The present search report has been drawn up for all claims

| Place of search | Date of completion of the search | Examiner |
|---|---|---|
| Berlin | 31-12-1981 | LEMMERICH |

EPO Form 1503.1 06.78